Europäisches Patentamt

European Patent Office

Office européen des brevets

(11) Publication number: 0 244 127
A1

## EUROPEAN PATENT APPLICATION

(21) Application number: 87303347.6

(22) Date of filing: 15.04.87

(51) Int. Cl.4: B01D 53/36 , B01J 23/89

(30) Priority: 16.04.86 US 852704

(43) Date of publication of application:
04.11.87 Bulletin 87/45

(84) Designated Contracting States:
AT BE CH DE ES FR GB GR IT LI LU NL SE

(71) Applicant: JOHNSON MATTHEY, INC.,
4 Malin Road
Malvern Pennsylvania 19355(US)

(72) Inventor: Becker, Robert E.
808 Maple Glen Lane
Wayne Pennsylvania 19087(US)
Inventor: Truex, Thimothy J.
1141 Thomas Road
Wayne Pennsylvania 19087(US)
Inventor: Windawi, Hassan
3 Colonial Way Willistown Township
Malvern Pennsylvania 19355(US)

(74) Representative: Arthur, Bryan Edward
Withers & Rogers 4 Dyer's Buildings Holborn
London EC1N 2JT(GB)

(54) Catalyst.

(57) A three-way catalyst for use in controlling $NO_x$, carbon monoxide and hydrocarbon emissions in automotive exhaust gas, said catalyst comprising a support carrying a catalytically effective amount of at least one platinum group metal and nickel, the nickel being present in an amount sufficient to reduce $H_2S$ content when the catalyst is used under fuel-rich conditions.

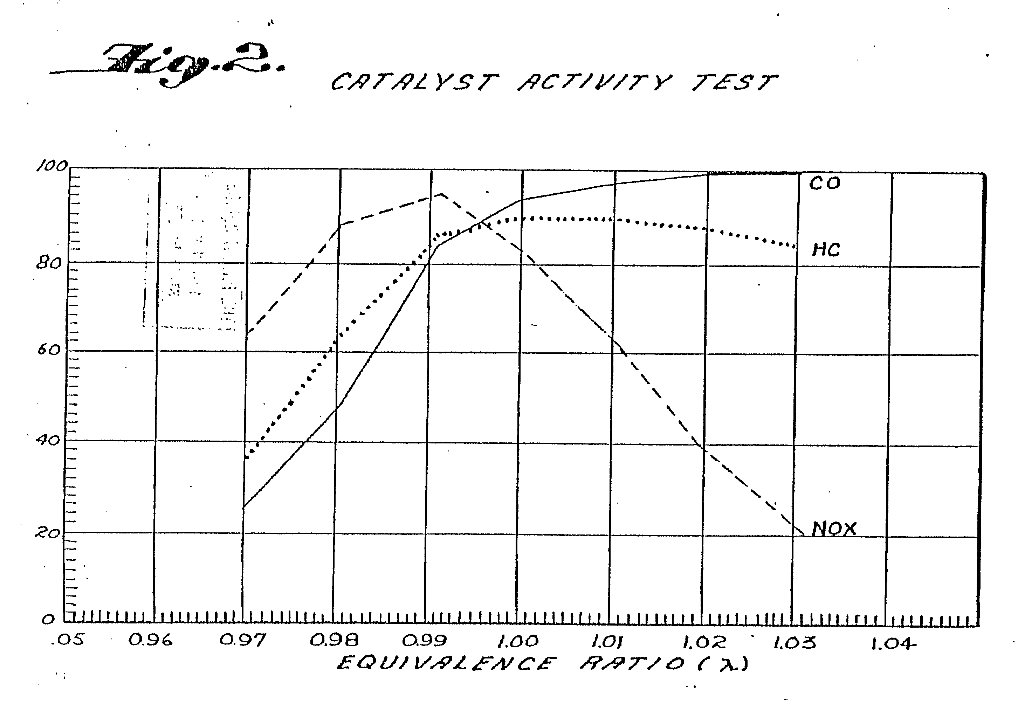

_Fig. 2._ CATALYST ACTIVITY TEST

EP 0 244 127 A1

## CATALYST

The present invention is concerned with a novel catalyst which is particularly useful in the treatment of automotive exhaust gases to remove $NO_x$, carbon monoxide and hydrocarbons therefrom.

Three-way catalysts for use in reducing the emission of $NO_x$, carbon monoxide and hydrocarbons in automotive exhausts are now well known. Some of these catalysts, particularly those which include relatively large amounts of ceria, are effective in reducing $NO_x$, carbon monoxide and hydrocarbons, but lead to the undesired formation and emission of $H_2S$ when used under fuel-rich conditions.

The principal object of the invention is to provide a catalyst or catalyst system which is capable of functioning as a three-way catalyst for the reduction of $NO_x$, carbon monoxide and hydrocarbon emissions while at the same time minimizing the emission of $H_2$ in automotive exhaust gases.

The undesired formation of $H_2S$ is apparently caused by the conversion of $SO_2$ in engine effluent gas when the engine is operating under a rich air/fuel ratio (A/F) at steady state conditions. This conversion appears to be catalyzed by noble metals such as platinum and/or other platinum group metals, which represent the active catalytic component in conventional three-way systems. As noted, the problem of $H_2S$ formation is particularly noticeable when the catalyst includes ceria.

The catalyst of the invention is based on the finding that the addition of nickel, as such or as a compound thereof, preferably the oxide, to the noble metal suppresses the conversion of $SO_2$ to $H_2S$ when the catalyst is exposed to a rich A/F environment. The manner in which the nickel functions to reduce $H_2S$ formation is not completely understood. However, it appears that the nickel interacts either with the noble metal, e.g., platinum, or with the $SO_2$ in the exhaust gas to give the desired result.

The amount of nickel added to the catalyst can be varied. Usually, however, the ratio of nickel to platinum group metal will be in the range of 1:1 to 30:1, preferably 10:1 or higher. This is generally equivalent to about 60 to 600 grams/ft³ of catalyst volume. Amounts of nickel outside the indicated range may also be used, the essential requirement being that the nickel be present in sufficient amount to effectively reduce the $H_2S$ emission.

Apart from the addition of nickel, the catalyst of the invention may have the usual composition for a three-way catalyst. Generally the catalytic component comprises platinum, rhodium, palladium, ruthenium, or combinations thereof. The catalyst may also include such conventional components as ceria, lanthanides or other base metal components in amounts of 1 to 30% by weight based on the total weight of the catalyst.

The catalyst of the invention may be prepared in various ways which provide for the addition of the nickel in the desired amount. Thus, for example, nickel oxide may be mixed with the noble metal and then applied in conventional fashion to the catalyst support or substrate. A precursor for nickel oxide, e.g., a nickel salt which can be decomposed to the oxide, may also be used.

Conventional catalyst supports may be used, e.g., ceramic honeycombs, beads or pellets or high temperature resistant metals. An alumina washcoat or the like may also be applied to the substrate or support before the catalytic metal and nickel are applied thereto.

The invention is illustrated, but not limited, by the following examples:

Example I

A catalyst substrate was washcoated onto a ceramic monolithic honeycomb such as generally known in the art for preparing three-way catalysts to control automotive exhaust emissions. 1200 gm of cerium was co-mingled with 300 gm alumina producing a washcoat loading of 2.6 g/in³ or the monolithic honeycomb after calcination. The washcoated substrate was then impregnated with Pt and Rh solutions consisting of chloroplatinic acid and rhodium chloride to produce a noble metal loading on the washcoated honeycomb of 35 g/ft³ with a Pt:Rh weight ratio of 5:1.

## Example II

The catalyst of Example I was then evaluated in a synthetic rig to simulate exposure to exhaust gas from automobiles. The test conditions for steady state were as follows:

```
Temperature          =    600°C.
Space velocity       =    18,000   volumes of gas/
                                    volume
                                    catalyst
                                    monolith
                                    (hr⁻¹)
Flow rate            ≈    40.5     liters per
                                    minute (LPM)
Air/Fuel Ratio       =    13.5/1
Gas composition:
        C₃H₆         =    1350 ppm
        CO           =    2.5%
        NO           =    1200 ppm
        H₂           =    1.00%
        O₂           =    0.30%
        CO₂          =    13.00%
        H₂O          =    10.0%
        SO₂          =    40 ppm
        N₂           =    Balance
```

Gas effluents exiting the catalyst were analyzed for $H_2S$ content at time intervals of 5, 10, 20 and 40 minutes and were found to contain: 28, 24, 9 and 10 ppm $H_2S$, respectively.

## Example III

A catalyst was prepared as in Example I, but in addition containing 130 g of nickel oxide (equivalent to 100 grams nickel) co-mingled with the ceria and alumina contents as specified in Example I. The catalyst was then evaluated for $H_2S$ emission at 5, 10, 20 and 30 minutes as described in Example II. The $H_2S$ concentration in the effluent gas streams at those intervals was found to be below 0.6 ppm.

Example IV

The catalysts of Examples I and III were evaluated in a synthetic rig to simulate exposure to exhaust gas from automobiles. The test conditions for perturbated state were as follows:

$$Temperature = 600°C.$$
$$Space\ velocity = 18,000\ hr^{-1}$$
$$Flow\ Rate = 40.5\ LPM$$

Gas compositions:

| Constants: | Lean A/F = 15.5/1 | Rich A/F = 13.5/1 |
|---|---|---|
| $C_3H_6$ = 1350 ppm | CO = 0.57% | CO = 2.50% |
| NO = 1200 ppm | $H_2$ = 0.19% | $H_2$ = 1.00% |
| $CO_2$ = 17.0% | $O_2$ = 2.16% | $O_2$ = 0.30% |
| $SO_2$ = 40 ppm | $N_2$ = Bal. | $N_2$ = Bal. |
| $H_2O$ = 10.0% | | |

The duration of the perturbated pulse was adjusted so that the cycle consisted of 5 sec. rich and 5 sec. lean. The $H_2S$ concentrations in the effluent gas streams were then measured and were found to be less than 0.6 ppm for both catalysts.

Example V

A catalyst prepared as described in Example I was placed in the exhaust system of a vehicle which was then started and the A/F ratio was set at 12.5 to cause the catalyst temperature to increase to 600° C. The vehicle engine was then intermittently accelerated to cause a further increase in catalyst temperature to about 800° C. At this point the engine was allowed to idle at the A/F ratio of 12.5 and the temperature was allowed to cool rapidly to 600° C. Exhaust gas samples were then analyzed for $H_2S$ content. The $H_2S$ concentration was found to be 18 ppm.

Example VI

A catalyst prepared as described in Example III was placed in the exhaust system of a vehicle and was treated as described in Example V. Exhaust gas samples were then analyzed for $H_2S$ content and the $H_2S$ concentration was found to be 0.7 ppm.

Example VII

A catalyst prepared as described in Example I was placed in the exhaust system of a vehicle and was treated as described in Example V with the exception that the A/F ratio at idle was kept at 11.2. Exhaust gas samples were then analyzed five (5) times for $H_2S$ contents and the average $H_2S$ concentration was found to be 23 ppm.

4

Example VIII

A catalyst prepared as described in Example III was placed in the exhaust system of a vehicle and was treated as described in Example VII. Exhaust gas samples were then analyzed five (5) times for $H_2S$ contents and the average $H_2S$ concentration was found to be less than 1.5 ppm.

Example IX

A catalyst prepared as in Example I was placed in the exhaust system of a vehicle and the following procedure was then carried out.

1. Engine was started and allowed to idle in neutral.

2. After 10 minutes plant air was injected into the exhaust header pipe at either rich or lean conditions.

3. Air was removed and the exotherm ceased when the catalyst bed temperature achieved 750° C.

4. $H_2S$ impinger samples were obtained during catalyst bed temperature cool down from 750 to 600° C. at A/F = 11.2.

5. Air was injected into the exhaust to begin an exotherm until the bed temperature achieved 750° C.

6. Steps 3, 4 and 5 were then repeated.

$H_2S$ concentrations were found to be 2 ppm for warm-up at A/F = 16.4, and 58 ppm for warm-up at A/F = 14.

Example X

A catalyst prepared as in Example III was placed in the exhaust system of a vehicle and was treated as described in Example IX. $H_2S$ concentrations were found to be < 2 ppm for warm-up at A/F = 16.4 and at A/F = 14.

Example XI

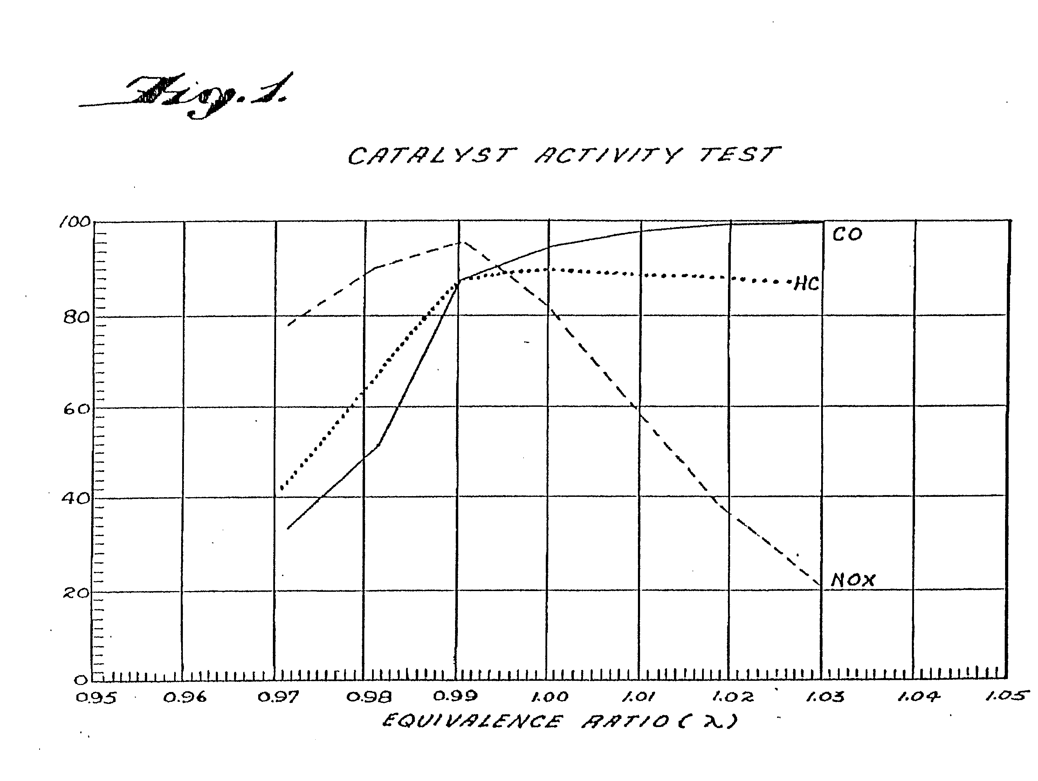

A catalyst prepared as in Example I was placed in an engine dynamometer and evaluated for performance in reducing the emission of $NO_x$, CO, and hydrocarbons from vehicle exhaust. The three-way performance was as shown in FIGURE 1.

Example XII

A catalyst prepared as in Example III was placed in an engine dynamometer and evaluated for performance as in Example XI. The three-way performance was as shown in FIGURE 2. This Example shows that the addition of nickel to the catalyst does not deteriorate catalyst performance.

It will be appreciated that various modifications may be made in the invention as described above. Accordingly. the scope of the invention is defined in the following claims wherein:

Claims

1. A three-way catalyst for use in controlling $NO_x$, carbon monoxide and hydrocarbon emissions in automotive exhaust gas, said catalyst comprising a support carrying a catalytically effective amount of at least one platinum group metal and nickel, the nickel being present in an amount sufficient to reduce $H_2S$ content when the catalyst is used under fuel-rich conditions.

2. A catalyst according to claim 1, wherein the support comprises a ceramic honeycomb with a washcoat thereon.

3. A catalyst according to claim 2 which includes ceria.

4. A catalyst according to claim 3, wherein the ratio of nickel to platinum group metal is the range of 1:1 to 30:1.

*Fig. 1.*

CATALYST ACTIVITY TEST

0 244 127

EQUIVALENCE RATIO ( λ )

# Fig.2.

CATALYST ACTIVITY TEST

0 244 127

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 376 699 (ENGELHARD MINERALS & CHEMICALS) * Claims 1,7,8,10,15,17; page 19, examples VI,VII * | | B 01 D 53/36 B 01 J 23/89 |
| A | DE-A-2 360 975 (W.R. GRACE) * Claims 1,2,7; page 26, example 10; page 28, example 11 * | | |
| A | FR-A-2 298 367 (W.R. GRACE) | | |
| A | FR-A-2 168 502 (NISSAN MOTOR) * Claims 1,4,5,7; page 11, example 3 * | | |
| A | US-A-4 006 103 (G.H. MEGUERIAN) * Claims 1,4,8; column 4, line 26 * | | |

TECHNICAL FIELDS SEARCHED (Int. Cl.4)

B 01 J 23/00
B 01 D 53/00

The present search report has been drawn up for all claims

| Place of search | Date of completion of the search | Examiner |
|---|---|---|
| THE HAGUE | 24-08-1987 | DEVISME F.R. |